# EUROPEAN PATENT SPECIFICATION

(11) **EP 2 889 209 B1**
(45) Date of publication and mention of the grant of the patent: **20.11.2024**
(21) Application number: 14195834.8
(22) Date of filing: 02.12.2014
(51) Int. Cl.: B62J 17/10, B62J 17/02

(54) **FRONT COVER STRUCTURE FOR A MOTORCYCLE**
VORDERE ABDECKUNGSSTRUKTUR FÜR EIN MOTORRAD
STRUCTURE DE COUVERTURE AVANT POUR UNE MOTO

(30) Priority: 26.12.2013 JP 2013269626
(43) Date of publication of application: 01.07.2015
(73) Proprietor: HONDA MOTOR CO., LTD., Tokyo, 107-8556 (JP)
(72) Inventor: Nishimoto, Taro, Saitama, 351-0193 (JP); Shimoji, Tomotake, Saitama, 351-0193 (JP); Kuramitsu, Tomofumi, Saitama, 351-0193 (JP); Sato, Kazuo, Saitama, 351-0193 (JP)
(74) Representative: Beder, Jens

(56) References cited:
- EP-A1- 1 733 956
- JP-A- 2008 247 056
- US-A- 4 709 774

## Description

The present invention relates to the improvement of body cover structure of motorcycle.

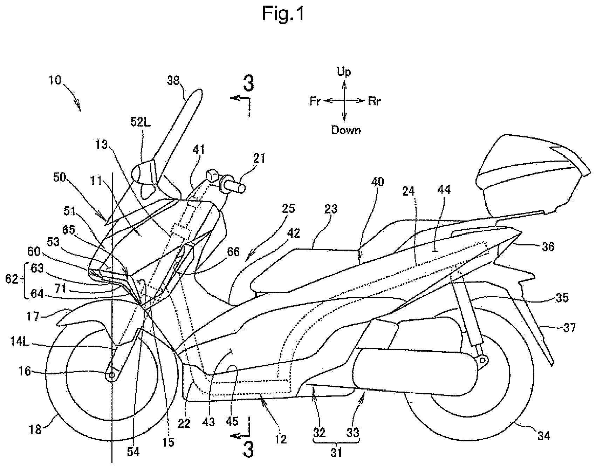

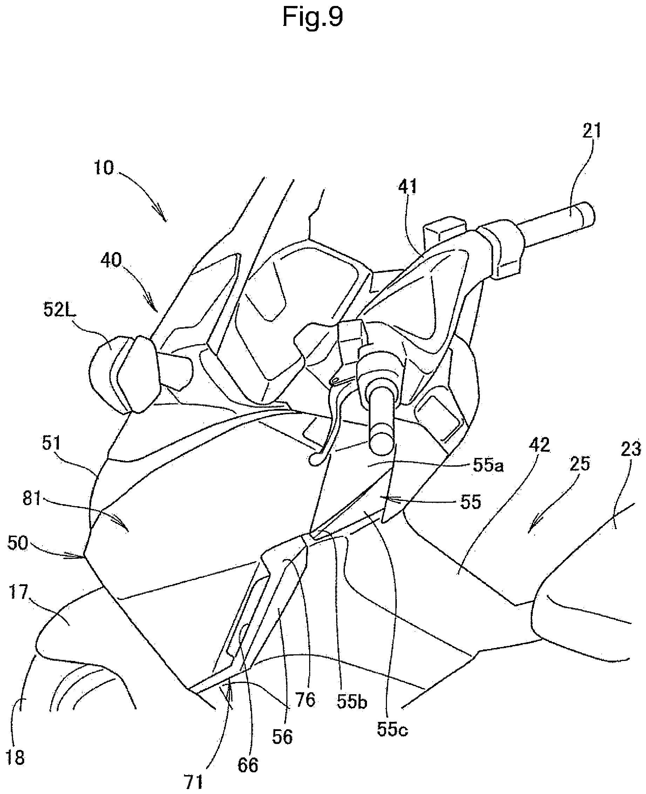

As for motorcycle, a naked type vehicle without front cover and a vehicle with front cover have been made in practical use. The vehicle having a front cover may be provided a port by communicating the inside of the front cover with the outside of the front cover. The motorcycle having the front cover provided with such a port is widely known (for example, see FIGS. 1 and 9 in Japanese Unexamined Utility Model Application Publication No.H4-37089) .

As shown in FIG. 1 in Japanese Unexamined Utility Model Application Publication No.H4-37089, the motorcycle has a front cover (10) covering the front portion of the vehicle body, and a side cover (32) provided so as to be movable to the width direction of the vehicle by a link (40) on the front cover (10) and covering the side portion of the vehicle body (numbers in parentheses show signs described in Japanese Unexamined Utility Model Application Publication No.H4-37089. The same shall apply hereinafter.).
An intake portion (35) opened to the front direction is provided on the front portion of a side cover (32) . The traveling wind is introduced from the intake port (35) to the inside of the side cover (32). The introduced traveling wind is discharged from an air discharging port (37) provided on the rear portion of the side cover (32) and opened to the side direction. The discharged traveling wind is blown by the traveling wind flowing along the outer surface of the side cover (32), and flows to the outer direction in the width direction of the vehicle so as not to blow the driver directly.

It is preferable to introduce a large amount of traveling wind as much as possible from the intake port (35) and to discharge from the air discharging port (37) outward in the width direction of the vehicle so as not to blow the driver directly. However, in the art in Japanese Unexamined Utility Model Application Publication No. H4-37089, it is necessary to largely shift the side cover (32) outward in the width direction of the vehicle and to open the intake port (35) widely for introducing a large amount of traveling wind from the intake port (35), which makes the cover becomes larger.

The art is required such that the enlargement of the front cover can be suppressed, and simultaneously the traveling wind can be introduced as much as possible.

A front cover structure for motorcycle, in which all features of the preamble of claim 1 are disclosed, is described in EP 1 733 956 A1.

It is an object of the present invention to provide a front cover structure for e-f- motorcycle such that the enlargement of the front cover can be suppressed, and simultaneously the traveling wind can be introduced as much as possible.

This object is achieved by a front cover structure for motorcycle according to the enclosed independent claim 1. Advantageous features of the present invention are defined in the corresponding subclaims.

In the invention related to Claim 1, the front cover has the upper portion provided above the front wheel; and the side portion extended downward from the both side portions of the upper portion in the width direction of the vehicle. The duct has the longitudinal intake port provided on the front end of the side portion and opened vertically and longitudinally, and the oblong intake port provided on the lower end of the upper portion and opened horizontally and longitudinally. Namely, the intake port is in a shape so as to be along the upper and side directions of the front wheel. Accordingly, the intake port can secure the larger intake area than the area in a simple circle-shape or the area in a simple square-shape. As a result, the amount of the introduced traveling wind can be increased without the enlargement of the front cover.

In the invention related to claim 1, the front cover has the front inner cover and the front outer cover covering the outside of the front inner cover, the duct is formed between the front outer cover and the front inner cover. The front inner cover is formed so as to be extended to the inner direction of the oblong intake port in the width direction of the vehicle and has a guide portion guiding the traveling wind to the longitudinal intake port. Accordingly, the traveling wind introduced from the oblong intake port can flow together with the traveling wind introduced from the longitudinal intake port. As a result, the passage area in the back side of the duct becomes smaller than the passage area of the inlet of the intake port, which can increase the flow velocity of the traveling wind and can increase the intake amount of the traveling wind.

In the invention related to claim 2, the boundary between the longitudinal intake port and the oblong intake port is disposed behind the axle shaft of the front wheel. The boundary between the longitudinal intake port and the oblong intake port is provided in further rear direction side than the position where the ground height of the front wheel is highest. Accordingly, the size of the height direction of the longitudinal intake port can be suppressed. As a result, the enlargement of the front cover can be suppressed.

In the invention related to claim 3, the duct has the air discharging port discharging the traveling wind between the rear end portion of the front inner cover and the rear end portion of the front outer cover. The front inner cover has the first front inner cover portion forming the oblong intake port and the longitudinal intake port and the second front inner cover portion forming the air discharging port. Accordingly, the rigidity can be improved at the layered portion. As a result, even if a large amount of traveling wind is introduced, the vibration of the front cover can be decreased, and the ride comfort of the rider can be improved.

In the invention related to Claim 5, the seat on which the rider is seated is provided behind the head pipe, the straddle space straddled by the rider is formed between the seat and the front cover. The rear portion of the second front inner cover portion extends to the outside in the width direction of the vehicle so as to surround the rear edge of the front outer cover from the rear direction, and the air discharging port is opened to the side direction in the width direction of the vehicle. Accordingly, the traveling wind can be discharged to the side direction in the width direction of the vehicle.
As a result, the traveling wind from the outside of the front cover can prevent from entering to the inside at the rear end portion of the front cover, and the rider can be protected from the traveling wind, which can improve the ride comfort.
FIG. 1 is a left side view of the motorcycle related to the present invention.
FIG. 2 is a front view of the motorcycle shown in FIG. 1.
FIG. 3 is a cross-sectional view taken along a 3-3 line in FIG. 1.

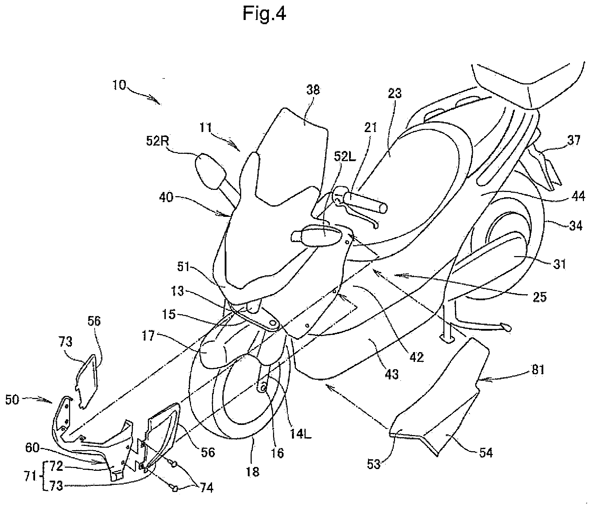

FIG. 4 is an exploded perspective view of the front cover shown in FIG. 1.
FIG. 5 is a front view of the front inner cover shown in FIG. 4.
FIG. 6 is a left side view of the front inner cover shown in FIG. 4.
FIG. 7 is a perspective view of the front outer cover shown in FIG. 4.
FIG. 8 is a left side view of the front outer cover shown in FIG. 4.
FIG. 9 is a rear perspective view of the front cover shown in FIG. 3.
FIG. 10 is a main parts enlarged view of the front cover shown in FIG. 3.
FIG. 11 is a functional diagram of the intake port.
FIG. 12 is a functional diagram of the inside of the duct.
FIG. 13 is a functional diagram of the air discharging port.

The embodiment of the present invention will be explained as below, with reference to the attached drawings. Moreover, the drawings should be seen by following the directions shown in arrows. The directions including "front (Fr)","rear (Rr)","left (L)","right (R)","upper (Up)","down (Down)" follow the directions viewed from the rider.

Firstly, the embodiment of the present invention will be explained with reference to the drawings.

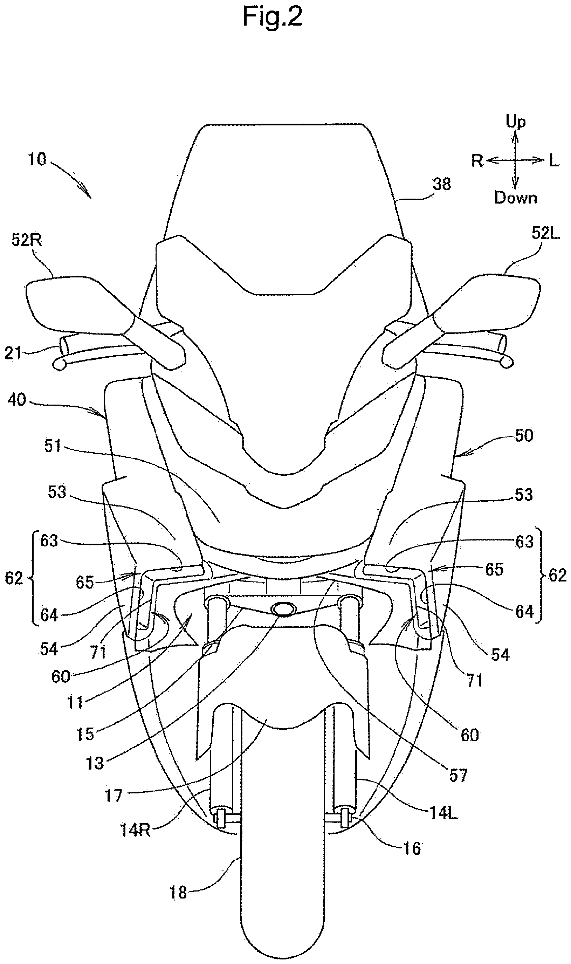

As shown in FIGS. 1 and 2, a vehicle 10 is a motorcycle. The vehicle 10 has a body frame 12 forming a vehicle body 11, a head pipe 13 forming the front portion of the body frame 12, a bottom bridge 15 supporting the upper end of a right and left pair of front forks 14L, 14R attached to the lower end of the head pipe 13, and a front wheel 18 supported on an axle shaft 16 which is on the lower end of the front forks 14L, 14R and the upper direction of the front wheel is covered with the front fender 17.

Moreover, the vehicle 10 has a body cover 40 covering the vehicle body 11. The front portion of the vehicle 10 has a front cover 50 covering the front portion of the vehicle body 11 and provided on the head pipe 13 through the front cover stay (not shown), a lightening device 51 provided on the front cover 50 and lightening the front direction of the vehicle, and a handle bar 21 rotatably supported on the upper portion of the head pipe 13, and mirrors 52L, 52R provided on the front cover 50 in front of the handle bar 21.

The body frame 12 has a main frame 22 extended downward from the head pipe 13 to the rear direction, a seat rail 24 extended upward from the rear end portion of the main frame 22 to the rear direction and directly and indirectly supporting a seat 23. A straddle space 25 straddled by the rider is formed between the seat 23 and the front cover 50. Moreover, only the main frame 22 is provided so as to head for the rear direction from the head pipe 13 in the embodiment. As for the configuration of body frame 12, a main frame or a down frame may be provided so as to head for the rear direction of the vehicle from the head pipe 13 without limitation to this embodiment.

Moreover, a power unit 31 of a unit swing type engine is provided on the main frame 22. The power unit 31 is configured with an engine 32 and a transmission 33. The power output from the engine 32 is transmitted to the rear wheel 34 provided on the rear portion of the power unit 31 through the transmission 33. Moreover, a cushion unit 35 absorbing an impact on the rear wheel 34 is provided between the rear portion of the power unit 31 and the seat rail 24.

A tail light unit 36 is provided behind the seat rail 24. A rear fender 37 is disposed below a tail light unit 36 so as to cover the upper direction and the rear direction of the rear wheel 34. A windshield 38 is provided on the upper portion of the front cover 50.

A body cover 40 has a front cover 50 covering at least a part of the head pipe 13, a handle cover 41 covering the handle bar 21, a main frame cover 42 covering the upper direction of the main frame 22, a main frame side cover 43 connected to the main frame cover 42 and covering the side portion of the vehicle 10, and a rear side cover 44 connected to the main frame cover 42 and covering the side direction in the width direction of the vehicle and the rear portion of the vehicle in the width direction of the vehicle.

Furthermore, the front cover 50 has an upper portion 53 provided above the front wheel 18, a side portion 54 extended downward from the both side portions of the upper portion 53 in the width direction of the vehicle. The front cover 50 has right and left ducts 60 guiding the traveling wind are provided inside the front cover 50.

The duct 60 has right and left intake ports 62 introducing the traveling wind to the front end of the front cover 50. The intake port 62 has an oblong intake port 63 provided on the lower end of the upper portion 53 and opened horizontally and longitudinally in the width direction of the vehicle in the front view, and a longitudinal intake port 64 provided on the front end of the side portion 54 and opened vertically and longitudinally. The oblong intake port 63 is formed so as to be opened horizontally and longitudinally from the upper end of the longitudinal intake portion 64 to the inside in the width direction of the vehicle. The intake port 62 is formed in an L-shape in the front view with the oblong intake port 63 and the longitudinal intake port 64.

As mentioned above, the intake port 62 is formed in an L-shape in the front view with the oblong intake port 63 and the longitudinal intake port 64, and also has a shape along the movable area of the front wheel 18. Accordingly, a large amount of the traveling wind can be introduced without the enlargement of the front cover 50. The front cover 50 can be downsized. Accordingly, the front cover 50 can be formed in a shape such that the traveling wind does not directly flow to the handle bar 21 by improving the degree of freedom in designing of the outer shape of the front cover 50. The ride comfort of the rider can be improved. In addition, the intake port 62 is opened on the front surface of the vehicle 10 so as to head for the front direction. Accordingly, larger amount of traveling wind can be introduced to the intake port 62.

The oblong intake port 63 and the longitudinal intake port 64 are integrally formed. A bending portion 65 bending is formed at the border of the oblong intake port 63 and the longitudinal intake port 64. The bending portion 65 is disposed behind the axle shaft 16 of the front wheel 18 in the side view of the vehicle. As mentioned above, the bending portion 65 is provided behind the position where the ground height of the front wheel 18 is highest. Accordingly, the longitudinal intake port 64 can be controlled so as not to be enlarged unnecessarily. As a result, the enlargement of the front cover 50 can be suppressed.

Moreover, an air discharging port 66 for discharging the traveling wind introduced to the duct 60 is formed on the rear portion of the front cover 50. A cooling intake port 57 introducing the cooling wind passing through the center of the vehicle body 11 for cooling the engine 32 is formed adjacent to the intake port 62 on the front portion of the front cover 50. The cooling intake port 57 is formed so as to be surrounded with the first front inner cover portion 72 and the lightening device 51.

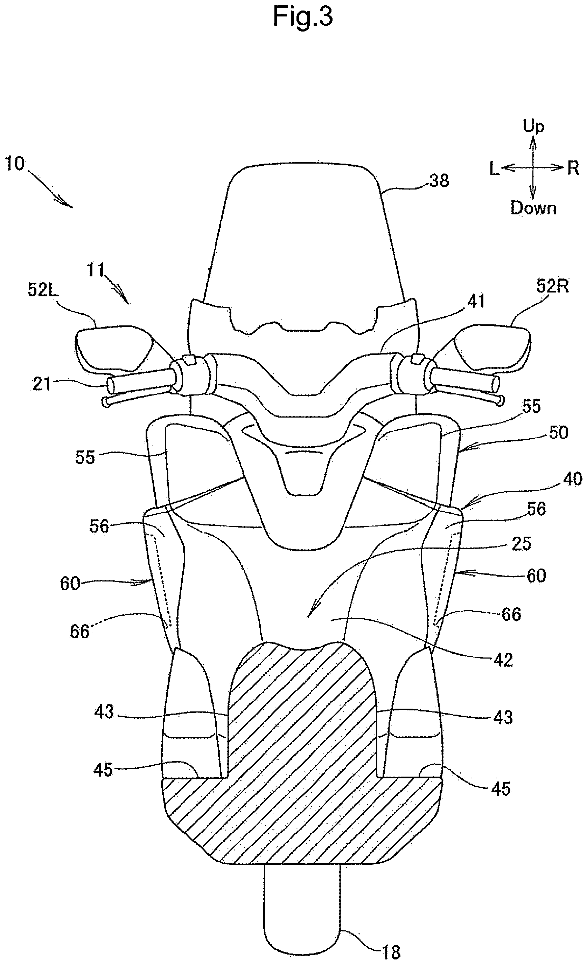

Next, the rear portion of the front cover 50 will be explained. As shown in FIG. 3, right and left lids 55, 55 of right and left console boxes (not shown) are provided on the rear portion of the front cover 50 below the handle cover 41. Right and left rear surface portions 56, 56 are provided below the right and left lids 55, 55 and on the outside in the width direction of the vehicle. Right and left air discharging ports 66, 66 are provided on the outside of the front cover 50 in the width direction of the vehicle. The right and left air discharging ports 66, 66 are positioned in further front direction than the right and left rear surface portions 56, 56.

Moreover, the vehicle body cover 40 has right and left steps 45, 45 on which the rider puts the foot below the straddle space 25.

Next, the configuration of the front cover 50 will be explained. The front cover 50 has a front inner cover 71 covering the front portion of the vehicle body 11 formed inside the front cover, a front outer cover 81 covering the outside of the front inner cover 71. The front inner cover 71 has a first front inner cover portion 72 forming the longitudinal intake port (shown as the sign 64 in FIG. 2) and the oblong intake port (shown as the sign 63 in FIG. 2), and right and left second front inner cover portions 73 forming the air discharging port (shown as the sign 66 in FIG. 1).

The first front inner cover portion 72 is formed in an U-shape in the plan view such that the both end portions are formed so as to be faced and suspended to the outer direction in the width direction of the vehicle. Right and left second front inner cover portions 73, 73 are formed so as to face to the outer direction in the width direction of the vehicle. Right and left second front inner cover portions 73, 73 are fastened to the first front inner cover portion 72 with bolts 74.

The front inner cover 71 configured with the first front inner cover portion 72 and the right and left second front inner cover portions 73, 73 are attached from the front direction of the head pipe 13. The right and left front outer covers 81 are attached to the front inner cover 71 from the side direction in the width direction of the vehicle. Then, the duct 60 is formed between the front inner cover 71 and the front outer cover 81.

Next, the front inner cover 71 will be explained.

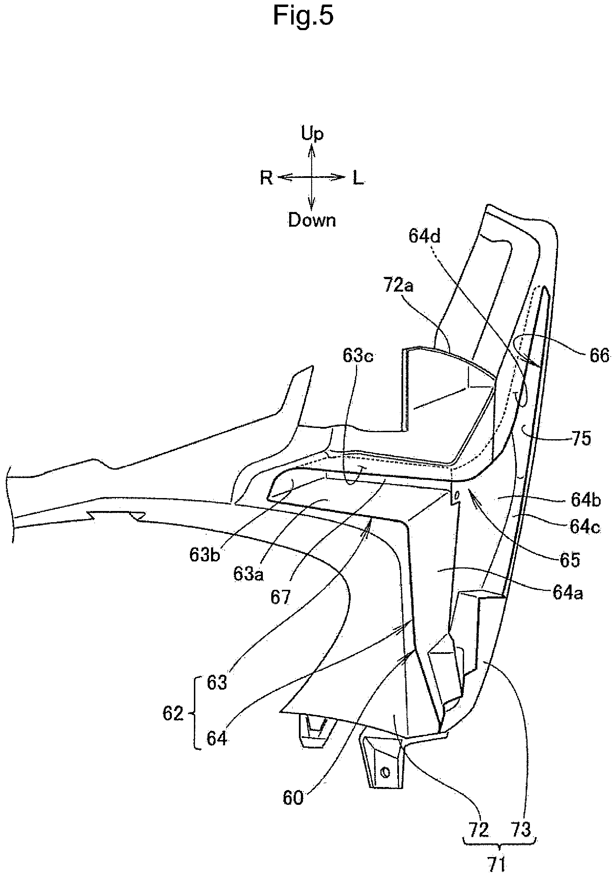

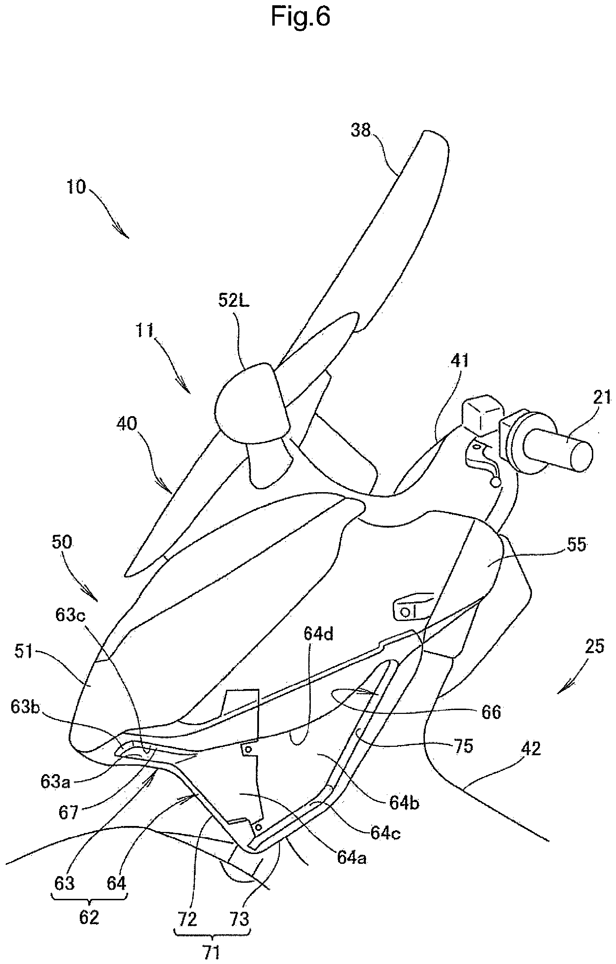

As shown in FIGS. 5 and 6, in the front inner cover 71, the first front inner cover portion 72 has a guide portion 67 formed so as to be extended to the inner direction of the oblong intake port 63 in the width direction of the vehicle and to guide the traveling wind to the longitudinal intake port 64. More specifically, the oblong intake port 63 is configured with a lower face portion 63a, an inside portion 63b, a top surface portion 63c and the guide portion 67.

The guide portion 67 is positioned such that the inside in the width direction of the vehicle is in the front direction of the vehicle, and is extended to the rear direction of the vehicle as it approaches to the outer direction of the vehicle. Accordingly, the traveling wind introduced from the oblong intake port 63 can effectively flow together with the longitudinal intake port 64.

Moreover, the first front inner cover portion 72 has a first inner wall portion 64a vertically extended in the inside of the longitudinal intake port 64 in the width direction of the vehicle. Furthermore, the second front inner cover 73 has a second inner wall portion 64b which is in a flush level with the first inner wall portion 64a, and a backward-rising lower surface portion 64c formed so as to rise backward from the front lower end of the longitudinal intake port 64.

The first front inner cover portion 72 and the second front inner cover portion 73 are connected to the top surface portion 63c, and have a protruding top surface portion 64d extended to the rear direction of the vehicle and simultaneously protruding to the lower direction.

The passage area of the duct 60 becomes smaller by the backward-rising lower surface portion 64c and the protruding top surface portion 64d, as it approaches from the intake port 62 to the air discharging port 66. As a result, the traveling wind can be powerfully discharged from the air discharging port 66.

Moreover, the rear end of the first front inner cover portion 72 has a rib 72a bending to the inside in the width direction of the vehicle. The first front inner cover portion 72 and the second front inner cover portion 73 are layered in a double structure. In addition, the rib 72a is formed. Accordingly, the rigidity of the front inner cover 71 can be improved. As a result, even if the large amount of the traveling wind is introduced, the vibration of the front cover 50 can be reduced, which can improve the ride comfort of the rider.

Next, the front outer cover 81 will be explained.

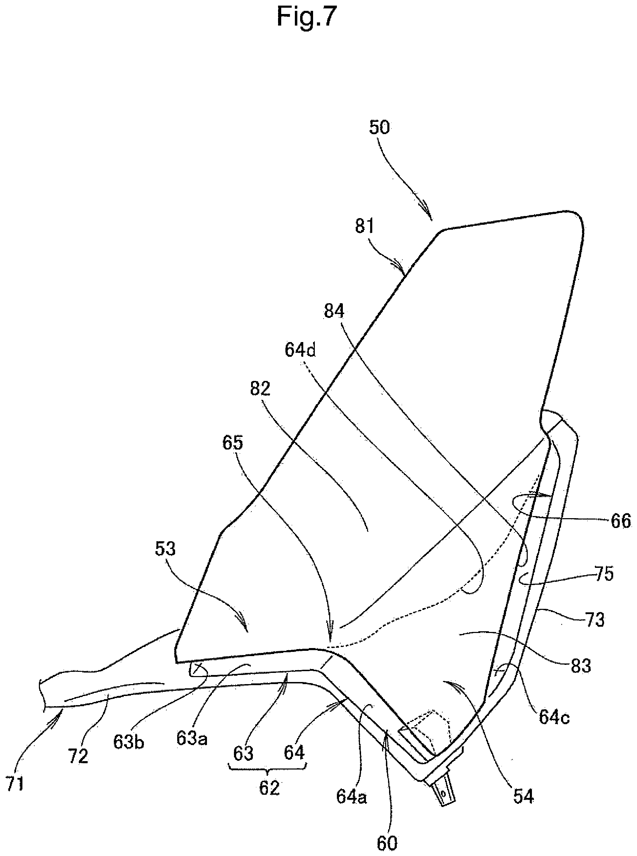

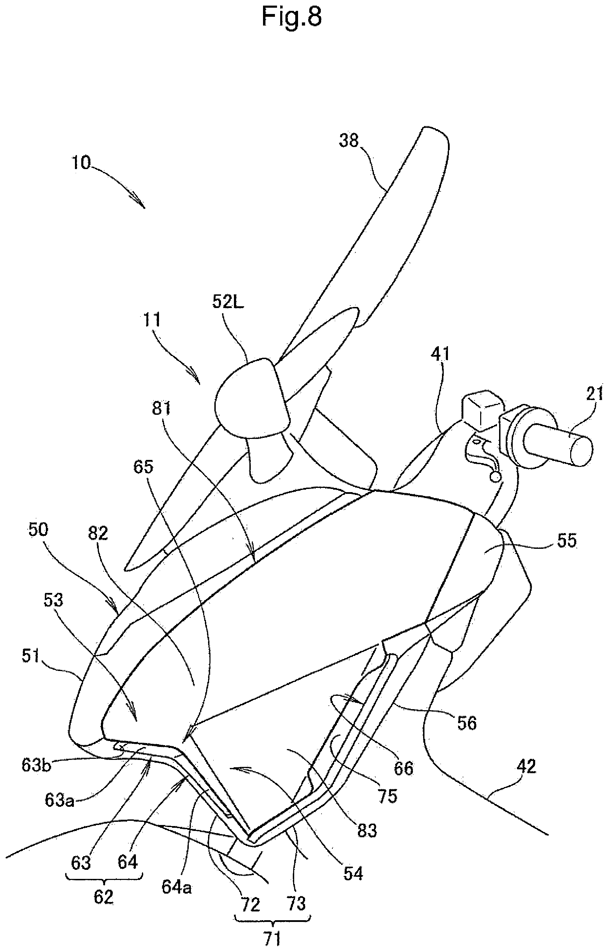

As shown in FIGS. 7 and 8, the front outer cover 81 is positioned on the upper portion 53 of the front cover 50, and has an upper surface portion 82 extended upward from the front end to the rear direction and forming an upper surface, and a side surface portion 83 suspended from the end portion of the upper surface portion 82 in the width direction of the vehicle and forming the side surface. The front inner cover 71 is covered with the front outer cover 81, which forms the duct 60.

Moreover, the rear portion of the second front inner cover portion 73 has a side guide portion 75 extended to the outside in the width direction of the vehicle so as to surround a rear edge 84 of the front outer cover 81 from the rear direction. Accordingly, the air discharging port 66 formed by the side guide portion 75 and the rear edge 84 of the front outer cover 81 is opened to the side direction in the width direction of the vehicle.

Next, the rear portion of the front cover 50 and the periphery of the air discharging port 66 will be explained.

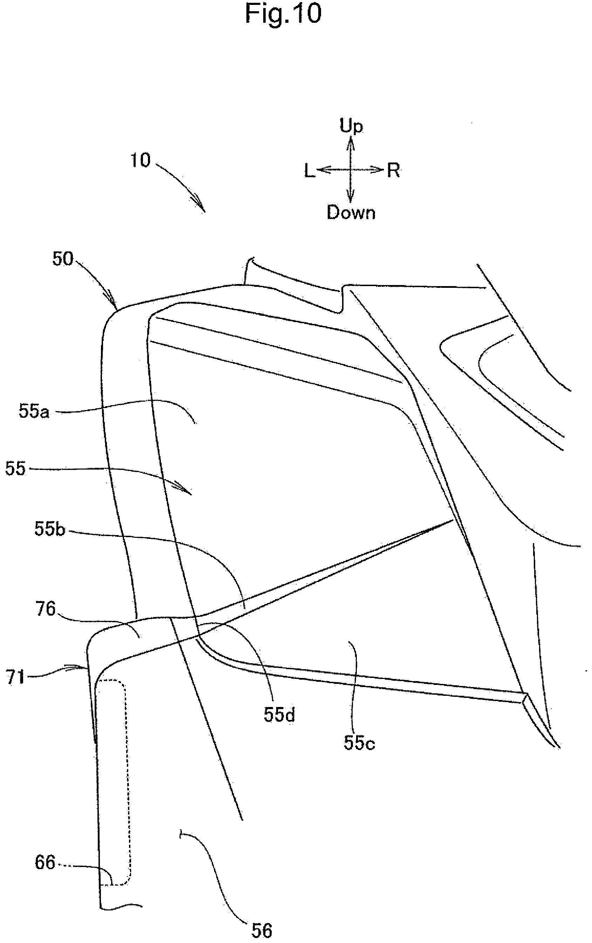

As shown in FIGS. 9 and 10, the lid 55 of the console box is provided on the rear portion of the front cover 50 at the higher position than the air discharging port 66. The lid 55 has a first wall surface portion 55a suspended from the upper end, a projecting portion 55b projecting from the lower end of the first wall surface portion 55a to the rear direction of the vehicle, and a second wall surface portion 55c suspended from the rear end of the projecting portion 55b.

The projecting portion 55b has a triangular shape, is positioned higher with the one apex on the inside in the width direction of the vehicle, is inclined downward to the outside in width direction of the vehicle, and is positioned lower with the two apexes on the outside in the width direction of the vehicle. Furthermore, the projecting portion 55b has the triangular shape in the embodiment. The projecting portion may have a rectangular shape and the like without limitation to this embodiment, even if the inside in the width direction of the vehicle is positioned higher and the outside in the width direction of the vehicle is positioned lower.

Moreover, the front inner cover 71 has a shoulder portion 76 extended from the upper end of the rear surface portion 56 of the front cover 50 to the front direction of the vehicle. The shoulder portion 76 is continuously formed to a lower edge 55d of the projecting portion 55b in a flush level, is bent downward from the lower edge 55d to the outer direction in the width direction of the vehicle, and is formed to the upper end of the air discharging port 66.

Hereinafter, the function of the body cover structure of the above-mentioned motorcycle 10 will be described.

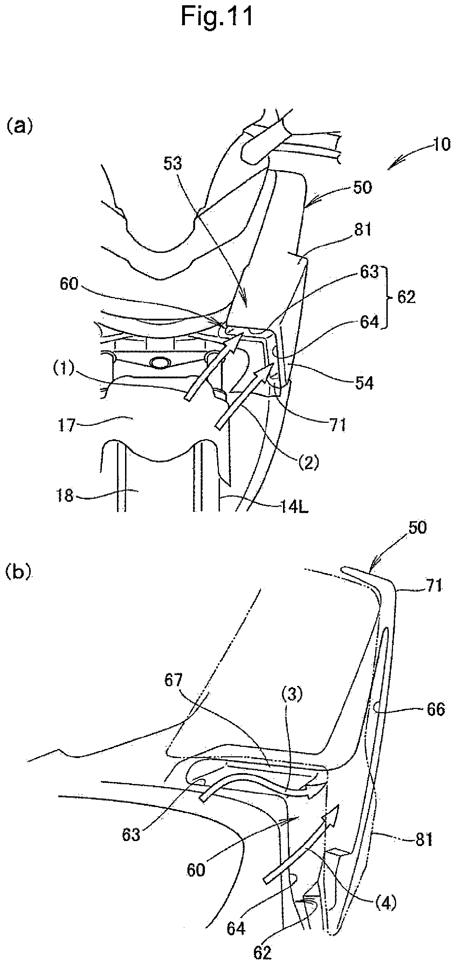

As shown in FIG. 11 (a), the traveling wind is introduced from the intake port 62 to the inside of the duct 60. The traveling wind from the upper direction of the front fender 17 is introduced from the oblong intake port 63 to the inside of the duct 60 as shown in an arrow (1) . The traveling wind from the outer direction of the front fender 17 in the width direction of the vehicle is introduced from the longitudinal intake port 64 to the duct 60 as shown in an arrow (2) to the duct 60.

As shown in FIG. 11 (b), the traveling wind introduced from the oblong intake port 63 flows along the guide portion 67 as shown in an arrow (3). The traveling wind introduced from the longitudinal intake port 64 flows to the rear direction as shown in an arrow (4).

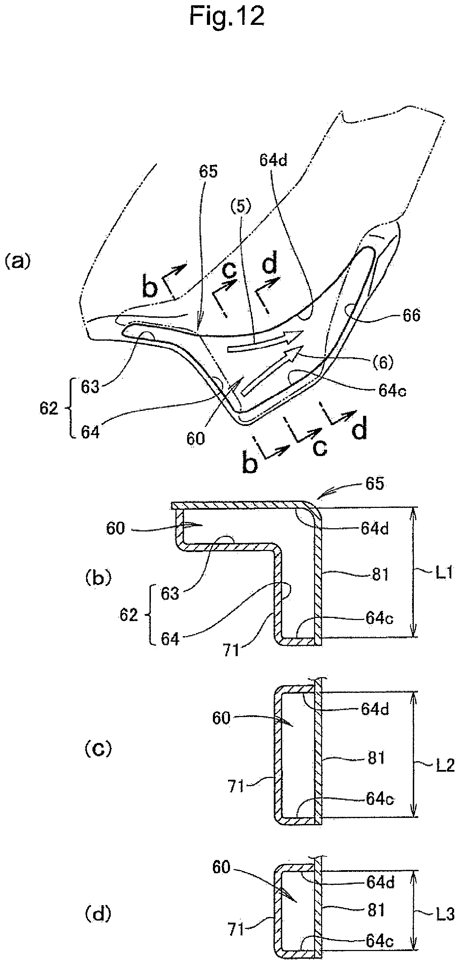

As shown in FIG. 12 (a), the traveling wind flowing along the upper portion of the duct 60 flows along the protruding top surface portion 64d as shown in an arrow (5). The traveling wind flowing along the lower portion of the duct 60 flows along the backward-rising lower surface portion 64c as shown in an arrow (6).

As shown in FIG. 12 (b), in the vicinity of the port of the duct 60, *L1* shows the distance in the height direction from the backward-rising lower surface portion 64c to the protruding top surface portion 64d, and the intake port 62 is in an L-shape. Accordingly, the passage area is large in the vicinity of the intake port.
As shown in FIG. 12 (c), in the vicinity of the middle of the duct 60, *L2* shows the height distance from the backward-rising lower surface portion 64c to the protruding top surface portion 64d. *L1* is set to be longer than *L2,* as shown as *L2<L1.* The passage is in a rectangular-shape, and the passage area as shown in (c) is smaller than the passage area as shown in (b).

As shown in FIG. 12 (d), in further backward than the duct 60, *L3* shows the height distance from the backward-rising lower surface portion 64c to the protruding top surface portion 64d. It is set that the *L2* is longer than *L3,* as shown as *L3<L2.* The passage area as shown in (d) is smaller than the passage area as shown in (c).

As mentioned above, the passage area becomes smaller as it approaches to the back from the intake port 62 of the duct 60. As a result, the introduced traveling wind increases the flow velocity, as it approaches to the back of the duct 60.

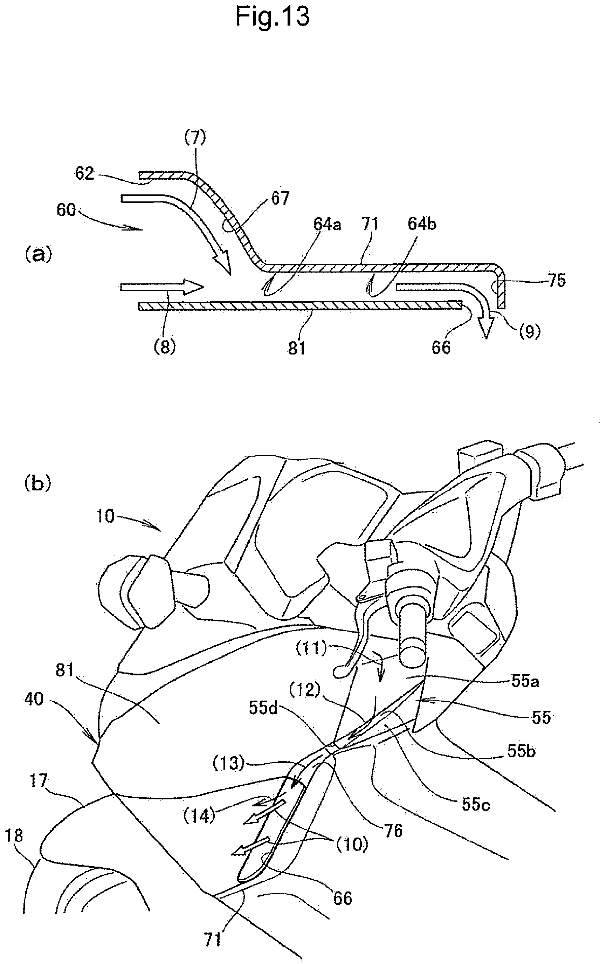

FIG. 13 (a) is a view simplified a flat section of the duct 60. The guide portion 67 has a curvature in the rear direction of the vehicle. Accordingly, the traveling wind introduced from the intake port 62 smoothly flows along the guide portion 67, and joins to the traveling wind flown from the longitudinal intake port (shown as the sign 64 in FIG. 11) as shown in an arrow (8).

The air discharging port 66 is opened to the outer direction in the width direction of the vehicle. Accordingly, the joined traveling wind increases the flow velocity and flows as shown in an arrow (9), and is discharged from the outer direction in the width direction of the vehicle by the side guide portion 75.

As shown in FIG. 13 (b), the traveling wind is discharged from the air discharging port 66 as shown in an arrow (10). Accordingly, the traveling wind flowing along the outside of the front cover 40 is introduced to the outer direction in the width direction of the vehicle, which can prevent the traveling wind from flowing to the inside in the rear direction of the rear end portion of the front cover 40. As a result, the ride comfort of the rider can be improved.

Moreover, in rainy weather and the like, the rainwater adhered to the front cover 40 runs down from the upper portion of the front cover 40 along the first wall surface portion 55a as shown in an arrow (11). The rainwater runs to the side direction as shown in an arrow (12) by the projecting portion 55b. The projecting portion 55b and the shoulder portion 76 are continuously formed in a flush level. Accordingly, the rainwater runs along the shoulder portion 76 as shown in an arrow (13) . Then, the rainwater is blown off to the side direction of the vehicle 10 as shown in an arrow (14) by the traveling wind discharged from the air discharge port 66.

As mentioned above, the air discharging port 66 is provided so as to be adjacent to the rear edge of the front cover 40, which can prevent the rainwater and the mud adhered to the front cover 40 from entering into the straddle space behind the front cover 40.

Furthermore, in the embodiment, the body cover structure of motorcycle of the present invention is applied to the scooter-type vehicle.

Moreover, the left side of the vehicle body cover structure is mainly explained in the embodiment. The right body cover structure of the vehicle is the same as the left one.

The body cover structure of the present invention is preferable to motorcycle.
10···motorcycle (vehicle), 13···head pipe, 16···axel shaft, 18···front wheel, 23···seat, 25···straddle space, 50···front cover, 53···upper portion, 54···side portion, 60···duct, 62···intake port, 63···oblong intake port, 64···longitudinal intake port, 66···air discharging port, 67···guide portion, 71···front inner cover, 72···first front inner cover portion, 73···second front inner cover portion, 81···front outer cover.

## Claims

1. A front cover structure for ef a motorcycle (10), comprising
a front cover (50) covering the front portion of a vehicle body (11);
a duct (60) provided inside the front cover (50) and guiding the traveling wind from the front side; wherein
the front cover (50) has an upper portion (53) provided above a front wheel (18) and a side portion (54) extended downward from both side portions of the upper portion (53) in the width direction of the vehicle; and
said duct (60) has an intake port (62),
said intake port (62) has a longitudinal intake port (64) provided on the front end of said side portion (54) and opened vertically and longitudinally, and an oblong intake port (63) provided on the lower end of said upper portion (53) and opened horizontally and longitudinally from the upper end of said longitudinal intake port (64) to the inside in the width direction of the vehicle;
the intake port (62) is located in the front end of the front cover (50) and the oblong intake port (63) and the longitudinal intake port (64) are integrally formed to be formed in L-shape in the front view; **characterized in that**
said front cover (50) has a front inner cover (71) covering the front portion of said vehicle body (11) formed inside the front cover (50), and a front outer cover (81) covering the outside of the front inner cover (71) from the outside in the width direction of the vehicle,
said duct (60) is formed between said front outer cover (81) and said front inner cover (71) by covering said front inner cover (71) with said front outer cover (81), and
said front inner cover (71) is formed so as to be extended to the inner direction of said oblong intake port (63) in the width direction of the vehicle and has a guide portion (67) guiding the traveling wind to said longitudinal intake port (64), and
the duct (60) extends in the front and rear direction, wherein the duct (60) becomes from the L-shape to a rectangular-shape in the vicinity of the middle of the duct (60),
a distance (L2) in the height direction in the vicinity of the middle of the duct (60) is smaller than distance (L1) in the height direction in the vicinity of the intake port (62) of the duct (60), a passage area in the vicinity of the middle of the duct (60) is smaller than a passage area in the vicinity of the intake port (62) of the duct (60), and
a distance (L3) in further backward than the duct (60) is smaller than the distance (L2) in the height direction in the vicinity of the middle of the duct (60), a passage area in further backward than the duct (60) is smaller than the passage area in the vicinity of the middle of the duct (60).

2. The front cover structure for a ef motorcycle according to claim 1, **characterized in that** a boundary between said longitudinal intake port (64) and said oblong intake port (63) is disposed behind an axle shaft (16) of said front wheel (18).

3. The front cover structure for a motorcycle according to claim 1 or 2, **characterized in that**
said duct (60) has an air discharging port (66) discharging the traveling wind between the rear end portion of said front inner cover (71) and the rear end portion of said front outer cover (81), and
said front inner cover (71) has a first front inner cover portion (72) forming said oblong intake port (63) and said longitudinal intake port (64), and a second front inner cover portion (73) forming said air discharging port (66).

4. The front cover structure for a motorcycle according to claim 3, **characterized in that** said rear end portion of said front inner cover (71) has a side guide portion (75) extended to the outside in the width direction of the motorcycle to discharge the traveling wind in the width direction of the motorcycle so as to surround a rear edge (84) of the front outer cover (81) from the rear direction.

5. The front cover structure for a motorcycle according to claim 3, **characterized in that**
a seat (23) on which a rider is seated is provided behind a head pipe (13),
a straddle space (25) straddled by the rider is formed between the seat (23) and said front cover (50),
the rear portion of said second front inner cover portion (73) extends to the outside in the width direction of the vehicle so as to surround a rear edge of said front outer cover (81) from the rear direction, and
said air discharging port (66) is opened to the side direction in the width direction of the vehicle.

## Patentansprüche

1. Eine Frontabdeckungsstruktur für ein Motorrad (10), aufweisend
eine Frontabdeckung (50), die den vorderen Teil einer Fahrzeugkarosserie (11) abdeckt;
einen Kanal (60), der im Inneren der Frontabdeckung (50) vorgesehen ist und den von vorne kommenden Fahrtwind leitet; wobei
die Frontabdeckung (50) einen über einem Vorderrad (18) vorgesehenen oberen Abschnitt (53) sowie einen sich von beiden Seitenabschnitten des oberen Abschnitts (53) in Breitenrichtung des Fahrzeugs nach unten erstreckenden Seitenabschnitt (54) aufweist; und
der Kanal (60) eine Einlassöffnung (62) aufweist,
die Einlassöffnung (62) eine Längs-Einlassöffnung (64) aufweist, die am vorderen Ende des Seitenabschnitts (54) vorgesehen ist und sich vertikal und in Längsrichtung öffnet, und eine längliche Einlassöffnung (63), die am unteren Ende des oberen Abschnitts (53) vorgesehen ist und sich horizontal und in Längsrichtung vom oberen Ende der Längs-Einlassöffnung (64) zur Innenseite in Breitenrichtung des Fahrzeugs öffnet;
die Einlassöffnung (62) am vorderen Ende der Frontabdeckung (50) angeordnet ist und die längliche Einlassöffnung (63) und die Längs-Einlassöffnung (64) einstückig ausgebildet sind, so dass sie von vorne gesehen L-förmig ausgebildet sind;
**dadurch gekennzeichnet, dass**
die Frontabdeckung (50) eine vordere innere Abdeckung (71) aufweist, die den vorderen Abschnitt der Fahrzeugkarosserie (11) abdeckt, der innerhalb der Frontabdeckung (50) ausgebildet ist, und eine vordere äußere Abdeckung (81), die die Außenseite der vorderen inneren Abdeckung (71) von der Außenseite in Breitenrichtung des Fahrzeugs abdeckt,
der Kanal (60) durch Abdecken der vorderen inneren Abdeckung (71) mit der vorderen äußeren Abdeckung (81) zwischen der vorderen äußeren Abdeckung (81) und der vorderen inneren Abdeckung (71) gebildet ist, und
die vordere innere Abdeckung (71) so ausgebildet ist, dass sie sich in die Innenrichtung der länglichen Einlassöffnung (63) in Breitenrichtung des Fahrzeugs erstreckt und einen Führungsabschnitt (67) aufweist, der den Fahrtwind zu der Längs-Einlassöffnung (64) leitet, und
der Kanal (60) sich in Vorne-Hinten-Richtung erstreckt, wobei der Kanal (60) in der Nähe der Mitte des Kanals (60) von der L-Form in eine rechteckige Form übergeht,
ein Abstand (L2) in Höhenrichtung in der Nähe der Mitte des Kanals (60) kleiner ist als ein Abstand (L1) in Höhenrichtung in der Nähe der Einlassöffnung (62) des Kanals (60), eine Durchgangsfläche in der Nähe der Mitte des Kanals (60) kleiner ist als eine Durchgangsfläche in der Nähe der Einlassöffnung (62) des Kanals (60), und
ein Abstand (L3) im hinteren Bereich des Kanals (60) kleiner ist als der Abstand (L2) in Höhenrichtung in der Nähe der Mitte des Kanals (60), eine Durchgangsfläche im hinteren Bereich des Kanals (60) kleiner ist als die Durchgangsfläche in der Nähe der Mitte des Kanals (60).

2. Die Frontabdeckungsstruktur für ein Motorrad nach Anspruch 1, **dadurch gekennzeichnet, dass**
eine Grenze zwischen der Längs-Einlassöffnung (64) und der länglichen Einlassöffnung (63) hinter einer Achswelle (16) des Vorderrades (18) angeordnet ist.

3. Die Frontabdeckungsstruktur für ein Motorrad nach Anspruch 1 oder 2, **dadurch gekennzeichnet, dass**
der Kanal (60) eine Luftauslassöffnung (66) aufweist, die den Fahrtwind zwischen dem hinteren Endabschnitt der vorderen inneren Abdeckung (71) und dem hinteren Endabschnitt der vorderen äußeren Abdeckung (81) auslässt, und
die vordere innere Abdeckung (71) einen die längliche Einlassöffnung (63) und die Längs-Einlassöffnung (64) bildenden ersten vorderen inneren Abdeckungsabschnitt (72), und einen die Luftauslassöffnung (66) bildenden zweiten vorderen inneren Abdeckungsabschnitt (73) aufweist.

4. Die Frontabdeckungsstruktur für ein Motorrad nach Anspruch 3, **dadurch gekennzeichnet, dass**
der hintere Endabschnitt der vorderen inneren Abdeckung (71) einen Seitenführungsabschnitt (75) aufweist, der sich in Breitenrichtung des Motorrads nach außen erstreckt, um den Fahrtwind in Breitenrichtung des Motorrads so abzuleiten, dass er eine Hinterkante (84) der vorderen äußeren Abdeckung (81) von hinten umgibt.

5. Die Frontabdeckungsstruktur für ein Motorrad nach Anspruch 3, **dadurch gekennzeichnet, dass**
hinter einem Kopfrohr (13) ein Sitz (23), auf dem ein Fahrer sitzt, vorgesehen ist,
zwischen dem Sitz (23) und der vorderen Abdeckung (50) ein vom Fahrer eingenommener Zwischenraum (25) gebildet ist,
der hintere Abschnitt des zweiten vorderen inneren Abdeckungsabschnitts (73) sich in Breitenrichtung des Fahrzeugs nach außen erstreckt, um eine Hinterkante der vorderen äußeren Abdeckung (81) von hinten zu umgeben, und
die Luftauslassöffnung (66) zur Seitenrichtung in Breitenrichtung des Fahrzeugs geöffnet ist.

## Revendications

1. Structure de capot avant pour une motocyclette (10), comprenant
un capot avant (50) couvrant la partie avant d'un corps de véhicule (11) ;
un conduit (60) fourni à l'intérieur du capot avant (50) et guidant le vent de déplacement à partir du côté avant ; dans laquelle
le capot avant (50) a une partie supérieure (53) fournie au-dessus d'une roue avant (18) et une partie latérale (54) étendue vers le bas à partir des deux parties latérales de la partie supérieure (53) dans la direction de largeur du véhicule ; et
ledit conduit (60) a un orifice d'admission (62),
ledit orifice d'admission (62) a un orifice d'admission longitudinal (64) fourni sur l'extrémité avant de ladite partie latérale (54) et ouvert verticalement et longitudinalement, et un orifice d'admission oblong (63) fourni sur l'extrémité inférieure de ladite partie supérieure (53) et ouvert horizontalement et longitudinalement à partir de l'extrémité supérieure dudit orifice d'admission longitudinal (64) jusqu'à l'intérieur dans la direction de largeur du véhicule ;
l'orifice d'admission (62) est situé dans l'extrémité avant du capot avant (50) et l'orifice d'admission oblong (63) et l'orifice d'admission longitudinal (64) sont formés d'un seul bloc pour avoir une forme en L dans la vue avant ; **caractérisée en ce que**
ledit capot avant (50) a un capot intérieur avant (71) couvrant la partie avant dudit corps de véhicule (11) formé à l'intérieur du capot avant (50), et un capot extérieur avant (81) couvrant l'extérieur du capot intérieur avant (71) à partir de l'extérieur dans la direction de largeur du véhicule,
ledit conduit (60) est formé entre ledit capot extérieur avant (81) et ledit capot intérieur avant (71) en couvrant ledit capot intérieur avant (71) avec ledit capot extérieur avant (81), et
ledit capot intérieur avant (71) est formé de façon à être étendu jusqu'à la direction intérieure dudit orifice d'admission oblong (63) dans la direction de largeur du véhicule et a une partie de guidage (67) guidant le vent de déplacement vers ledit orifice d'admission longitudinal (64), et
le conduit (60) s'étend dans la direction avant et arrière, dans laquelle le conduit (60) qui était en forme de L devient de forme rectangulaire à proximité du milieu du conduit (60),
une distance (L2) dans la direction de hauteur à proximité du milieu du conduit (60) est plus petite qu'une distance (L1) dans la direction de hauteur à proximité de l'orifice d'admission (62) du conduit (60), une zone de passage à proximité du milieu du conduit (60) est plus petite qu'une zone de passage à proximité de l'orifice d'admission (62) du conduit (60), et
une distance (L3) plus en arrière que le conduit (60) est plus petite que la distance (L2) dans la direction de hauteur à proximité du milieu du conduit (60), une zone de passage plus en arrière que le conduit (60) est plus petite que la zone de passage à proximité du milieu du conduit (60).

2. Structure de capot avant pour une motocyclette selon la revendication 1, **caractérisée en ce que**
une limite entre ledit orifice d'admission longitudinal (64) et ledit orifice d'admission oblong (63) est disposée derrière un arbre d'essieu (16) de ladite roue avant (18).

3. Structure de capot avant pour une motocyclette selon la revendication 1 ou 2, **caractérisée en ce que**
ledit conduit (60) a un orifice d'évacuation d'air (66) évacuant le vent de déplacement entre la partie d'extrémité arrière dudit capot intérieur avant (71) et la partie d'extrémité arrière dudit capot extérieur avant (81), et
ledit capot intérieur avant (71) a une première partie de capot intérieur avant (72) formant ledit orifice d'admission oblong (63) et ledit orifice d'admission longitudinal (64), et une deuxième partie de capot intérieur avant (73) formant ledit orifice d'évacuation d'air (66).

4. Structure de capot avant pour une motocyclette selon la revendication 3, **caractérisée en ce que**
ladite partie d'extrémité arrière dudit capot intérieur avant (71) a une partie de guidage latérale (75) étendue jusqu'à l'extérieur dans la direction de largeur de la motocyclette pour évacuer le vent de déplacement dans la direction de largeur de la motocyclette de façon à entourer un bord arrière (84) du capot extérieur avant (81) à partir de la direction arrière.

5. Structure de capot avant pour une motocyclette selon la revendication 3, **caractérisée en ce que**
un siège (23) sur lequel un motocycliste est assis est fourni derrière un tube de direction (13),
un espace à enfourcher (25) enfourché par le motocycliste est formé entre le siège (23) et ledit capot avant (50),
la partie arrière de ladite deuxième partie de capot intérieur avant (73) s'étend jusqu'à l'extérieur dans la direction de largeur du véhicule de façon à entourer un bord arrière dudit capot extérieur avant (81) à partir de la direction arrière, et
ledit orifice d'évacuation d'air (66) est ouvert jusqu'à la direction latérale dans la direction de largeur du véhicule.
